(19) Europäisches Patentamt
European Patent Office
Office européen des brevets

(11) **EP 1 690 675 B1**

(12) **EUROPEAN PATENT SPECIFICATION**

(45) Date of publication and mention
of the grant of the patent:
**24.10.2012 Bulletin 2012/43**

(21) Application number: **04799958.6**

(22) Date of filing: **30.11.2004**

(51) Int Cl.:
**B32B 15/08** (2006.01)

(86) International application number:
**PCT/JP2004/018110**

(87) International publication number:
**WO 2005/053947 (16.06.2005 Gazette 2005/24)**

(54) **LAMINATED METAL SHEET FOR CAN LID EXCELLING IN APPEARANCE AFTER RETORTING**

LAMINIERTE METALLPLATTE FÜR DOSENDECKEL MIT ANSPRECHENDEM AUSSEHEN NACH DEM STERILISIEREN

FEUILLE METALLIQUE LAMINEE POUR COUVERCLE DE BOITE PRESENTANT UNE EXCELLENTE APPARENCE APRES STERILISATION EN AUTOCLAVE

(84) Designated Contracting States:
**DE DK ES FR GB**

(30) Priority: **01.12.2003 JP 2003401897**

(43) Date of publication of application:
**16.08.2006 Bulletin 2006/33**

(73) Proprietor: **JFE Steel Corporation
Tokyo, 100-0011 (JP)**

(72) Inventors:
• **SUZUKI, Takeshi
I. P. Department JFE Steel Corp.
Tokyo 1000011 (JP)**
• **KUBO, Hiroshi,
I. P. Department JFE Steel Corp.
Tokyo 1000011 (JP)**
• **IWASA, Hiroki,
I. P. Department JFE Steel Corp.
Tokyo 1000011 (JP)**

(74) Representative: **HOFFMANN EITLE
Patent- und Rechtsanwälte
Arabellastrasse 4
81925 München (DE)**

(56) References cited:
EP-A1- 0 576 682        EP-A1- 0 685 509
EP-A1- 1 288 261        WO-A1-00/58087
WO-A1-01/17768        JP-A- 6 155 660
JP-A- 7 145 252        JP-A- 2001 145 978
JP-A- 2002 088 233        JP-A- 2002 120 278
JP-A- 2002 356 568        US-A- 5 900 325

**Description**

The present invention relates to a laminated metal sheet used for an end portion of metal can which packs food or drink, and specifically relates to a laminated metal sheet for can end being subjected to retort sterilization without raising a problem of deterioration of appearance caused by the generation of fine bubbles in the resin at outer face of the can end during retort sterilization.

Metallic cans for various drinks such as coffee and black tea, and for foods are normally treated by retort sterilization. Since the retort sterilization induces negative pressure (reduced pressure) to the can, deformation of the can may appear. To prevent the phenomenon, the metallic cans are shaped by a thick electrical chromium coated (lacquered) steel (ECCS) sheet or the like. From the point of easy-making, the metallic can is generally shaped by three-piece can, which is composed of a can shell and top and bottom can ends, or two-piece can composed of a can shell and a can end.

Conventionally the can is lacquered on the surface thereof. Since, however, from the point of reducing environmental load and of simplifying can-making process, there are trials of lamination of can-surface with a thermoplastic resin film instead of the conventional lacquering (coating). As of these thermoplastic lamination films, polyester film has drawn attention, and specifically polyethylene terephthalate film is emphasized because of its well-balanced characteristics. Several proposals have appeared on the basis of the polyethylene terephthalate film.

Patent Documents 1 and 2 disclose a can-making material prepared by laminating a biaxially oriented polyethylene terephthalate film on a metal sheet via a low melting point polyester adhesive layer.

Patent Documents 3 and 4 disclose a can-making material prepared by laminating an aromatic polyester film in amorphous state or of very low crystallinity on a metal sheet.

Patent Document 5 discloses a can-making material prepared by laminating a biaxially oriented polyethylene terephthalate film, of low orientation and of being thermally fixed, on a metal sheet.

[Patent Document 1] JP-A-56-10451 (the term "JP-A" referred to herein signifies the "Unexamined Japanese Patent Publication")
[Patent Document 2] JP-A-1-192546
[Patent Document 3] JP-A-1-192545
[Patent Document 4] JP-A-2-57339
[Patent Document 5] JP-A-64-22530

If, however, the metal sheets on which the respective films described in Patent Documents 1 to 5 are fused to laminate are applied to can ends, there may be formed fine bubbles as shown in FIG.. 1 in the film at outer face of the can end during the retort sterilization (usually conducted by steam of 120°C to 130°C), which deteriorates the appearance (turbidity and white mottles). The bubble formation in the outer film is extremely disliked because of drawbacks such as loss of beautiful appearance as the product and failing to read the printed characters on the end. Accordingly, the development of laminated metal sheet free of that type of phenomenon is strongly desired. To cope with the requirement, there may be applied a method of laminating polyester film only on the inner face of the can end, while giving conventional coating to the outer side thereof. That kind of method, however, requires plurality of steps of lamination and coating, which unnecessarily increases manufacturing cost to fail in fully attaining the merit of lamination.

JP 06 155660 A aims at a polyester resin coated metal panel having an improved water resistance and describes a polyethylene terephthalate resin and polybutylene terephthalate resin blend having a semi-crystallizaition time of 34 seconds.

JP 2002 356568 A relates to a film for laminating metal sheets and discloses a polyester composition comprising 10-70 wt.-% polyethylene terephthalate copolymer and 30-90 wt.-% polybutylene terephthalate.

JP 07 145252 A describes a polyester composition being composed of 40-60 wt.-% of an ethylene terephthalate polyester and 30-60 wt.-% of a butylene terephthalate polyester.

EP 0 685 509 A1, US 5 900 325 A, EP 0 576 682 A1 describe polyester films for laminating onto a metal sheet and disclose in this respect a polyester composition comprising a polyethylene terephthalate having an ethylene terephthalate as a main recurring unit and a polybutylene terephthalate having a butylene terephthalate as main recurring unit.

The present invention has been perfected to solve the above problems, and an object of the present invention is to provide a laminated metal sheet for can end, having excellent appearance after retorting.

To solve the above problems, the inventors of the present invention conducted the detailed study, and found that there is attained a laminated metal sheet for can end which does not generate fine bubbles in the outer face polyester film during retorting by specifying the physical characteristics of outer face amorphous layer.

The present invention has been perfected on the basis of the above finding, and the essence of the present invention is the following.

[1] The laminated metal sheet for can end is formed by laminating a polyester film thereon. The polyester film being laminated on the metal sheet on a side to become outer face of the formed end has the following characteristics:

(1) the amorphous polyester resin layer being formed in the neighborhood of the interface between the polyester film and the metal sheet has a half-time of crystallization of 40 seconds or smaller at 130°C and a double refractive index of 0.015 or smaller and;
(2) the amorphous polyester layer has a thickness in a range from 0.5 to 8 μm; and
(3) the polyester film has a water vapor transmissivity of 100 g/m$^2$/24 hr or smaller, wherein the amorphous polyester layer loses more the amorphous property at a larger distance from the interface with the steel thereby becoming crystalline.

[2] Regarding the laminated metal sheet for can end according to [1], the resin of the amorphous polyester layer is a polyester composition prepared by formulating a polyester (I) composed of ethylene terephthalate as a main repeating unit, and a polyester (II) composed of butylene terephthalate as a main repeating unit, while the percentage of the polyester (I) is in a range from 30 to 60% by weight, and the percentage of the polyester (II) is in a range from 40 to 70% by weight.
[3] For the laminated metal sheet for can end according to [1] and [2], the polyester film being laminated on the metal sheet on a side to become outer face of the formed end has a thickness of 10 μm or larger, and the total thickness of the polyester films being laminated on the metal sheet on both sides thereof to become outer face and inner face of the formed end is 60 μm or smaller.

As described above, the present invention provides a laminated metal sheet for can end having excellent appearance after retorting. The laminated metal sheet for can end obtained by the present invention does not generate fine bubbles in the film on outer face of the can end during retort sterilization, and does not induce whitening and turbidity of film caused by the bubbles. Furthermore, there are occurred no film damage and delamination during end-shaping step. In addition, protrusion of sealing agent from the can-end seam section can be suppressed. Consequently, the laminated metal sheet for can end obtained by the present invention is suitable for the material of end of metal can.

FIG.1 is a schematic drawing illustrating the retort treatment for a PET-laminated can end according to the present invention.
FIG. 2 is an enlarged view of A-A section of FIG. 1, showing the turbid state of film at outer face of the can end during the retort sterilization of metal can according to the present invention, and showing a part-enlarged view thereof to give a fine bubble generation state (10 μm).
FIG.3 illustrates the mechanism of bubble generation and formation accompanied by the retort sterilization of a metal can according the present invention.
FIG.4 shows the fine bubbles formed by vaporizing the condensed water on outer face film according to the present invention.
FIG. 5 is a graph for defining the thickness of amorphous polyester layer according to the present invention.

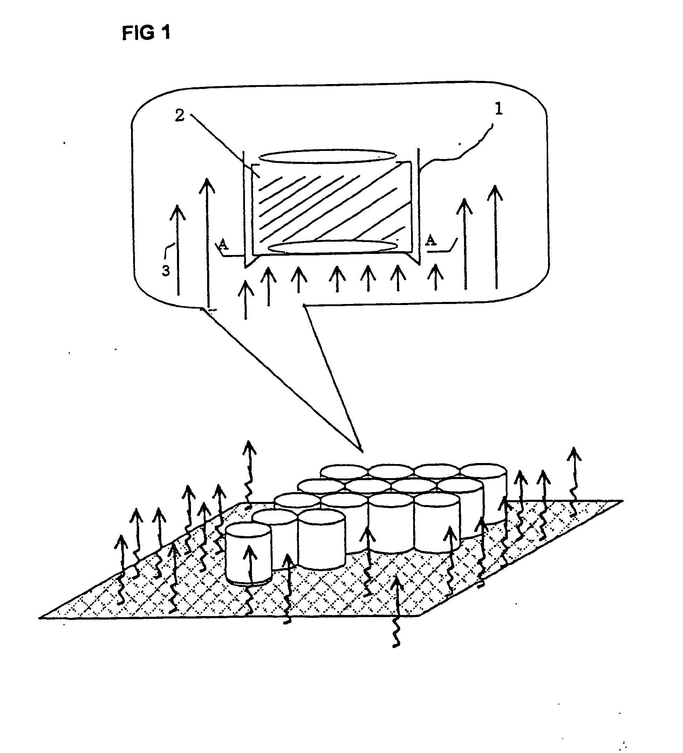

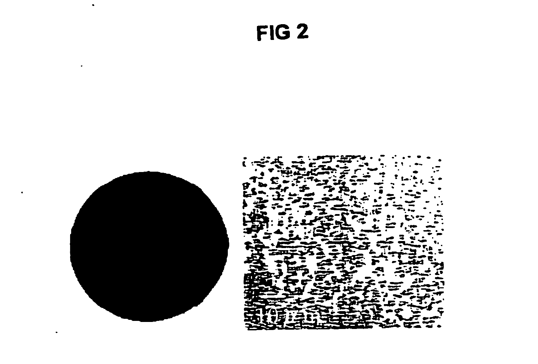

In the course of the study of the present invention, the inventors of the present invention focused on, when shaping a can end using a laminated metal sheet, the polyester film being laminated on a side to become outer face of the formed end, (hereinafter referred to simply as the "outer face film"), and the amorphous polyester layer being formed in the neighborhood of the interface between the outer face film and the metal sheet, (hereinafter referred to simply as the "amorphous polyester layer"). Thus the inventors specified the laminated sheet as follows as the characteristics of the present invention. That is to say, the present invention has the following characteristics: (1) the half-time crystallization of the amorphous polyester resin layer being formed in the neighborhood of the interface between the polyester film and the metal sheet is specified to 40 seconds or smaller at 130°C; (2) the thickness of the amorphous polyester layer is specified to a range from 0.5 to 8 μm and a double refractive index is 0.015 or smaller; and (3) the water vapor transmissivity of the outer face film is specified to 100 g/m$^2$/24 hr or smaller, wherein the amorphous polyester layer loses more the amorphous property at a larger distance from the interface with the steel thereby becoming crystalline. By the above-specification, there is obtained a laminated metal sheet for can end which gives excellent appearance without generating fine bubbles in the outer face film during retort sterilization, and not inducing whitening and turbidity of the film.
The present invention is described in detail in the following.
As illustrated in FIG.1, the retort sterilization for a food can or drinking can 1 packed with contents 2 is generally conducted by heating the can in high temperature steam of about 130°C. The symbol 3 in FIG.1 is the vapor. Although the positioning of the cans during the retort sterilization differs with user, normally the cans are arranged in upright position for saving space. FIG. 2 shows the film turbidity on A-A section of FIG.1, and shows fine bubbles in part-enlarged view of the turbid section. As seen in FIG.2, for a laminated can on which a polyester film is laminated on both sides of the metal sheet, the retort sterilization often forms fine bubbles in the outer face film. Since the fine bubbles are not observed before the retort sterilization, they are formed during the retort sterilization, not during the lamination. The presence of those bubbles presumably allows the light entered in the outer face film to disperse, thereby giving white turbid appearance. To suppress the deterioration of appearance of the laminated can end accompanied with the retort sterilization, therefore, the suppression of bubble formation in the outer face film is required.

Furthermore, the bubbles formed in the outer face film have the following characteristics. Since these bubbles are not formed even when the can is heated to 130°C under dry-heating condition, water vapor presumably contributes to the mechanism of bubble generation. In addition, when the retort sterilization is given to an empty can (without filling contents), no bubble is formed. The bubbles are not observed over the whole zone in the outer face film in the thickness direction thereof, but observed in the neighborhood of the interface between the outer face film and the steel sheet. Furthermore, the degree of bubble generation differs between the top end and the bottom end, observing the bubbles at bottom end, and observing very few bubbles at top end.

Based on the above characteristics, the formation of bubbles in the outer face film accompanied with the retort sterilization presumably comes from the mechanism given below.

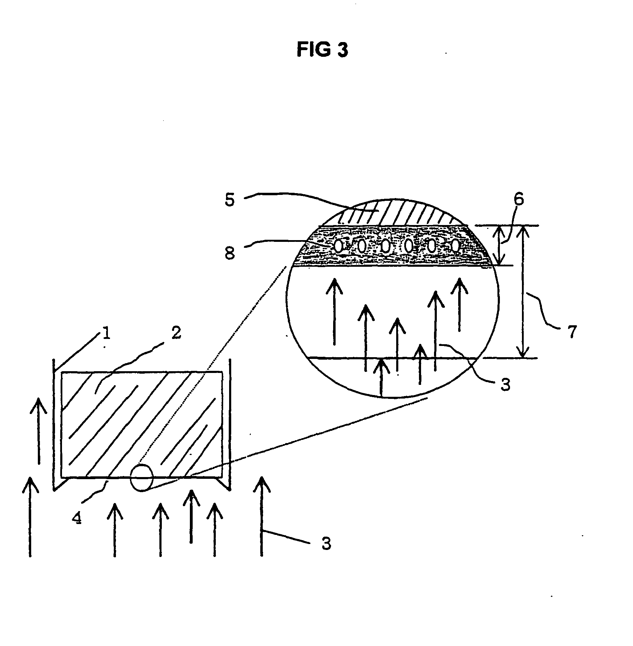

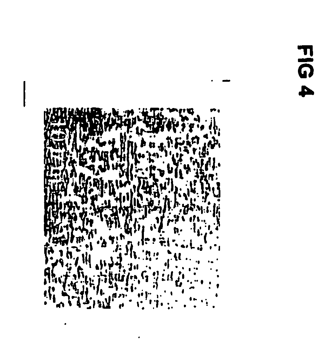

FIG. 3 illustrates the mechanism of bubble formation in the outer face film. FIG.4 shows fine bubbles in the neighborhood of the metal sheet in the outer face film of FIG. 3, giving enlarged view (10 $\mu$m) of fine bubbles formed by vaporizing the condensed water. FIG.3 shows the can 1, the contents 2, the vapor 3, a can end 4, a metal sheet 5, an amorphous polyester layer (soft) 6, an outer face film 7, and fine bubbles 8 formed by vaporizing the condensed water. As illustrated in FIG.3, the can end is exposed to the high temperature steam from the beginning of the retort sterilization, and a part of the water vapor enters the outer face film to reach near the interface with the steel sheet. That is, transmission is conducted at the outer face film 7. At the beginning of retort sterilization, since the nearby area of interface between the outer face film and the steel sheet is cooled by the contents from the inside of the can, the water vapor entered the interface forms condensed water in the outer face film. After that, with the progress of the retort sterilization, the temperature of the contents increases to induce re-vaporization of the condensed water at the interface with the steel sheet. A part of the vaporized water vapor transmits the outer face film, thus presumably goes out from the outer face film. The residual water vapor expands in the outer face film to deform the resin and form bubbles.

Presumable reasons of appearing the bubbles only in the neighborhood of the interface with the steel sheet are that the place of re-vaporization of condensedwater is near the interface, and that the amorphous resin in the neighborhood of the interface melted by contacting with the heated steel sheet during lamination of polyester film on the steel sheet is an amorphous resin which has large deformability owing to the mechanically soft property even after cooled and soendified, thus the amorphous resin is likely deformed by the expansion of condensed water accompanied with the vaporization, thereby likely forming bubbles. On the other hand, the amorphous resin loses more the amorphous property at larger distance from the interface with the steel sheet, thereby becoming crystalline. As a result, the resin becomes hard to be difficult in deforming, and the bubbles are difficult to be formed.

Normally a can has a head space therein. Owing to the head space, the top end of the can does not directly contact with the water vapor which entered the interface and with the contents. Accordingly, the cooling effect at the top end is small, and no condensed water is formed in the outer face film, thereby forming no bubbles and no whitening. Presumably by these reasons, at the top end, no bubble formation is observed in the outer face film.

To manufacture the laminated can end that does not form bubbles on the outer face film during retort sterilization and that does not deteriorate the appearance using the laminated metal sheet prepared by laminating a polyester film on both sides of the metal sheet, the inventors of the present invention focused on the outer face film and the amorphous polyester layer on the basis of the above-derived findings, and found that the following-given three requirements have to be satisfied at the same time.

That is, the half-time crystallization of the resin of the amorphous polyester layer is specified to 40 seconds or smaller at 130°C, the thickness of the amorphous polyester layer is specified to a range from 0.5 to 8 $\mu$m and a double refractive index is 0.015 or smaller, and the water vapor transmissivity of the outer face film is specified to 100 g/m$^2$/24 hr or smaller.

Description about the half-time of crystallization of the resin of the amorphous polyester layer being 40 seconds or smaller at 130°C is given below. The suppression of bubble formation can be attained by crystallizing the amorphous polyester layer as rapid as possible during the retort sterilization given at 130°C, thus increasing the strength of the amorphous layer. To do this, the half-time of crystallization of the resin of the amorphous polyester layer is specified to 40 seconds or smaller at 130°C. Shorter half-time of crystallization means higher thermal crystallization rate. If the half-time of crystallization at 130°C for conducting the retort sterilization is 40 seconds or smaller, the formation of bubbles is effectively prevented, thus suppressing the whitening of film.

For the determination of half-time of crystallization, a polymer crystallization rate tester (MK-801, manufactured by Kotaki Seisakusho Co., Ltd.) was used. A sample was placed between orthogonal polarizing plates. The transmitted light coming through the optically anisotropic crystal component which increased along with the progress of crystallization was determined at 130°C, (depolarized light intensity method). Then the following Avrami equation was applied to calculate the half-time of crystallization.

$$1 - X_c = Exp(-kt^n)$$

$$1 - X_c = (It - Ig)/(Io - Ig)$$

wherein,

$X_c$: crystallization degree
k: crystallization rate constant
n: Avrami constant
t: time (sec)
Io: depolarized light transmission intensity (start point)
It: depolarized light transmission intensity (after t sec)
Ig: depolarized light transmission intensity (end point)

The sample (8 mg in sample weight) was heated to a temperature of (maximum melting point of the resin + 50°C) for 1 minute in nitrogen atmosphere in a melting furnace built in the apparatus. Immediately after the heating, the sample was transferred to immerse in a crystallization bath, where the determination began after bringing the sample temperature to an equilibrium determination temperature within 10 seconds. The term "maximum melting point" referred herein signifies the maximum temperature among the temperatures giving the maximum depth of the heat-absorption peaks of one or more thereof appeared when the sample is heated at a temperature-rising rate of 20°C/min in a differential scanning calorimeter (910 DSC, manufactured by DuPont Instruments). Taking into account of the time until the sample reaches the thermal equilibrium, the determination was given by moving the sample in the crystallization bath, and by setting the time after 10 seconds had passed as t=0 sec. The depolarized light transmission intensity determined at t=0 second was defined as $I_o$, and the depolarized light transmission intensity at the point where the crystallization temperature curve on the graph of log t against the depolarized light transmission intensity entered the straight line profile was defined as Ig.

By controlling the percentages of resin components, the half-time of crystallization can be brought to 40 seconds or smaller. For example, if the resin composition is composed of polyethylene terephthalate and polybutylene terephthalate, higher percentage of the polyethylene terephthalate gives longer half-time of crystallization. Accordingly, by bringing the percentage of polyethylene terephthalate to 60% or smaller, the half-time of crystallization of the resin of the amorphous polyester layer at 130°C can be brought to 40 seconds or smaller.

The following is the description about the thickness of amorphous polyester layer in a range from 0.5 to 8 $\mu$m. When the amorphous polyester layer is formed to have a thin thickness, or smaller than 0.5 $\mu$m, the adhesion between the polyester resin and the metal sheet becomes insufficient, and the outer face film is separated at seam section on shaping the can end, or the outer face film is separated to lift during retort sterilization. On the other hand, if the thickness of the amorphous polyester layer increases to larger than 8 $\mu$m, even the polyester resin in which the resin of the amorphous layer gives 40 seconds or smaller half-time of crystallization at 130°C shows insufficient thermal crystallization of the amorphous layer, thereby failing to completely suppress the bubble formation.

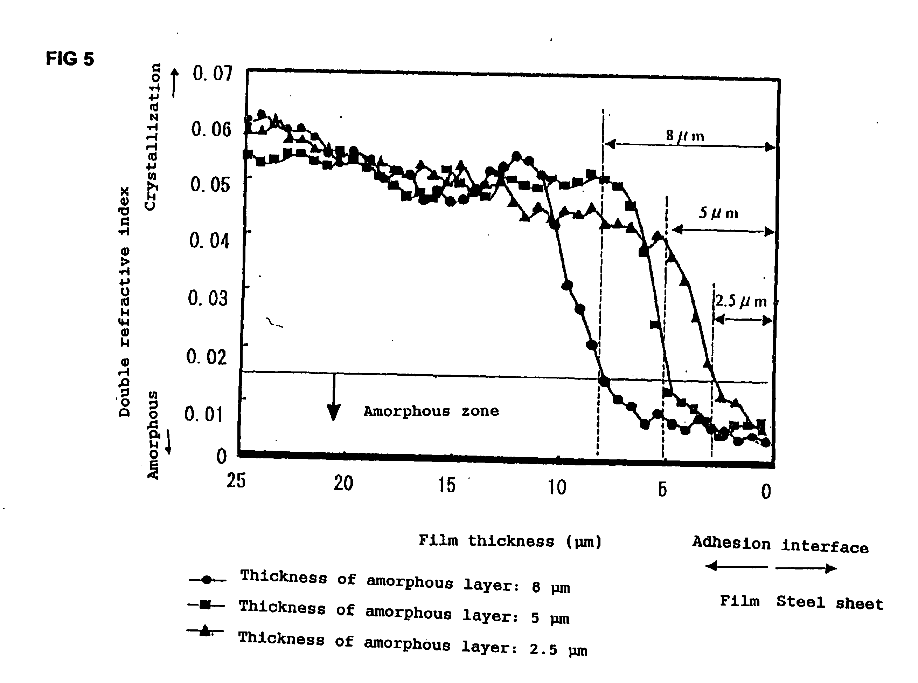

The term "thickness of the amorphous polyester layer" according to the present invention signifies the thickness in a zone of 0.015 or smaller double refractive index determined in the film thickness direction after laminating, as shown in FIG.5.

The thickness of the amorphous polyester layer can be brought to a range from 0.5 to 8 $\mu$m by controlling the temperature of the metal sheet being laminated and the roll-nip pass time.

The following is the description about the water vapor transmissivity of the outer face film of 100 g/m$^2$/24 hr or smaller. If the water vapor transmissivity of the outer face film exceeds 100 g/m$^2$/24 hr, the transmissivity of water vapor becomes excessively high, which results in increased volume of water entering the film, thereby failing to avoid the formation of water vapor bubbles during revaporizing step. Consequently, the water vapor transmissivity of the outer face film is specified to 100 g/m$^2$/24 hr or smaller.

Determination of the water vapor transmissivity according to the present invention is given by the following procedure. A laminated metal sheet is immersed in an acidic corrosive liquid (for example, HCl:$H_2O$=1:1) to dissolve the metal sheet to extract the film. For the extracted film, the water vapor transmissivity was determinedat 40°C and 90% RHusing a watervapor transmissivity tester (PERMATRAN W-600, manufactured by Mocon, Inc.), (JISK7129 B method).

The water vapor transmissivity of the outer face film can be regulated to 100 g/m$^2$/24 hr or smaller by adjusting the crystallization degree of the film. The crystallization degree of the film can be controlled by the heating temperature of the metal sheet during lamination, and the like.

With the specification described above, the laminatedmetal sheet for can end giving excellent appearance after retorting is obtained. According to the present invention, the requirement for the outer face polyester film is only the above three specified items. The film may be a single layer film (a film composed of a single resin composition) or may be a multilayer film (a film having two or more resin layers having different composition from each other in the thickness direction).

The film covering the inner face of the can end is not specifically limited if only the film is a polyester film which can be attached by thermal fusion simultaneously with the outer face film. The inner face film may be the same to the outer face film, may be a film of adhering to the metal sheet via a thermosetting adhesive, or may be a film of directly and thermally fusing with the metal sheet without applying adhesive.

The resin of the amorphous polyester layer according to the present invention is a polyester composition prepared by formulating polyester (I) composed of ethylene terephthalate as the main repeating unit, and polyester (II) composedofbutylene terephthalate as the main repeating unit. An example of the polyester composition is the one having the percentage of the polyester (I) in a range from 30 to 60% by weight, and the percentage of the polyester (II) in a range from 40 to 70% by weight.

The polyester (I) is polyester containing ethylene terephthalate as the main repeating unit, and it may be homopolymer or copolymer. For the case of copolymer, the copolymerizing component may be an acid component or an alcohol component. Examples of the copolymerizing acid component are: aromatic dicarboxylate such as isophthalic acid, phthalic acid, and naphthalene dicarboxylate; aliphatic dicarboxylate such as adipic acid, azelaic acid, sebacic acid, and decane dicarboxylate; and alicyclic dicarboxylate such as cyclohexane dicarboxylate. As of these, aliphatic dicarboxylate is preferred. Examples of the copolymerizing alcohol component are: aliphatic diol such as butane diol and hexane diol; and alicyclic diol such as cyclohexane dimethanol.

On the other hand, the polyester (II) is polyester containing butylene terephthalate as the main repeating unit, and it may be homopolymer or copolymer. For the case of copolymer, the copolymerizing component may be an acid component or an alcohol component. Examples of the copolymerizing acid component are: aromatic dicarboxylate such as isophthalic acid, phthalic acid, and naphthalene dicarboxylate; aliphatic dicarboxylate such as adipic acid, azelaic acid, sebacic acid, and decane dicarboxylate; and alicyclic dicarboxylate such as cyclohexane dicarboxylate. Examples of the copolymerizing alcohol component are: aliphatic diol such as ethylene glycol and hexane diol; and alicyclic diol such as cyclohexane dimethanol. They may be used separately or in combination of two or more of them.

When the polyester (I) and the polyester (II) are copolymer, the percentages of the copolymerizing components depend on their kinds. However, it is satisfactory if the copolymer shows the half-time of crystallization of 40 seconds or smaller at 130°C.

The formulation of the polyester (I) and the polyester (II) is not specifically limited if only their half-time of crystallization is 40 seconds or smaller at 130°C. Nevertheless, if the percentage of the polyester (II) is 40% or larger, the crystallization rate at 130°C becomes sufficiently high to readily reduce the half-time of crystallization to 40 seconds or smaller, thereby suppressing whitening. From this point of view, the lower limit of the percentage of the polyester (II) is preferably 40% by weight or larger. On the other hand, if the percentage of the polyester (II) exceeds 70% by weight, the film process ability deteriorates and the film likely suffers film cracks during high speed end-shaping step, though the suppression of whitening during retorting is favorable, thus the formulation is not suitable for practical use. Accordingly, the upper limit of the percentage of the polyester (II) is preferably 70% by weight.

If the percentage of the polyester (I) is smaller than 30% by weight, the film process ability deteriorates, and the film likely suffers film cracks during high speed end-shaping step, thus the lower limit of the percentage of the polyester (I) is preferably 30% by weight. On the other hand, if the percentage of the polyester (I) exceeds 60% by weight, the suppression of whitening becomes insufficient, thus the upper limit of the percentage of the polyester (I) is preferably 60% by weight.

The polyester resin being formed on the amorphous polyester layer according to the present invention is not specifically limited. However, a preferable polyester resin includes a polyester containing ethylene terephthalate as the main repeating unit, a polyester containing butylene terephthalate as the main repeating unit, and a mixture thereof, in view of agreement with the amorphous polyester layer described before. Each of the polyester containing ethylene terephthalate as the main repeating unit and the polyester containing butylene terephthalate as the main repeating unit may be homopolymer or copolymer. For the case of copolymer, the copolymerizing component may be an acid component or an alcohol component. Examples of the copolymerizing acid component are: aromatic dicarboxylate such as isophthalic acid, phthalic acid, and naphthalene dicarboxylate; aliphatic dicarboxylate such as adipic acid, azelaic acid, sebacic acid, and decane dicarboxylate; and alicyclic dicarboxylate such as cyclohexane dicarboxylate. As of these, aliphatic dicarboxylate is preferred. Examples of the copolymerizing alcohol component are: aliphatic diol such as hexane diol; and alicyclic diol such as cyclohexane dimethanol. The copolymerizing component may be polyester having the same resin composition to that of the amorphous polyester layer being formed in the neighbirhood of the interface with the metal sheet.

The resin of polyester film at the inner face of the can end according to the present invention is not specifically limited. However, a preferable polyester resin includes polyester containing ethylene terephthalate as the main repeating unit, a polyester containing butylene terephthalate as the main repeating unit, and a mixture thereof, in view of corrosion resistance to the contents.

Each of the polyester containing ethylene terephthalate as the main repeating unit and the polyester containing butylene terephthalate as the main repeating unit may be homopolymer or copolymer. For the case of copolymer, the copolymerizing component may be an acid component or an alcohol component. Examples of the copolymerizing acid component are: aromatic dicarboxylate such as isophthalic acid, phthalic acid, and naphthalene dicarboxylate; aliphatic dicarboxylate such as adipic acid, azelaic acid, sebacic acid, and decane dicarboxylate; and alicyclic dicarboxylate such as cyclohexane dicarboxylate. As of these, aliphatic dicarboxylate is preferred. Examples of the copolymerizing alcohol component are: aliphatic diol such as hexane diol; and alicyclic diol such as cyclohexane dimethanol.

All the polyester resins used for the film on the outer face and on the inner face of the can end according to the present invention are not limited in terms of the manufacturing method. For example, preferable methods include the one that an acid component, an alcohol component, and a copolymerizing component are esterified, and the obtained reaction products are brought to polycondensation, thus attaining the polyester resin, and the one that an acid component is preliminarily dimethylated, which product is then ester-interchanged with an alcohol component and a copolymerizing component, and the obtained reaction product is polycondensed to obtain the polyester resin.

In the course of manufacture of the polyester, it is also preferable to add a nucleating agent such as sodium montanate, talc, and barium stearate to increase the crystallization rate. In the course of manufacture of polyester, other additive such as antioxidant, thermal stabilizer, UV absorber, and antistatic agent may be added, at need.

The method for forming the polyester film according to the present invention is not specifically limited, and general biaxially oriented film-forming method, inflation method, non-oriented film-forming method, and the like may be applied. From the viewpoint of accuracy of film thickness during film-forming step and of secureness of film strength by orientation, however, the film-forming by the successive biaxially oriented film-forming method is preferred.

The thickness of outer face film according to the present invention is 10 $\mu$m or larger. If the thickness of outer face film is smaller than 10 $\mu$m, the film may be flawed by rubbing with other cans during end-shaping and can-transportation, thus exposing the metal face to deteriorate the appearance of can or generating corrosion from the exposed part during long period of storage, in some cases.

The sum of the thickness of the outer face film and the inner face film according to the present invention is 60 $\mu$m or smaller. With increase in the film thickness, the gap between the can end and the can shell decreases on can-seaming, and once the sum of the thickness of the outer face film and the inner face film exceeds 60 $\mu$m, the sealing agent protrudes from the seam section outward or inward the can, which deteriorates the appearance and which deteriorates taste and flavor of contents by contacting with the sealing agent. Inversely, if the amount of sealing agent is decreased to prevent the protrusion thereof, the pressure-endurance strength at the seam section may become insufficient, which fails to stabilize the can quality.

As the metal sheet according to the present invention, ECCS (electrical chromium lacquered steel) which is a commonly-used can material, tin-lacquered steel sheet, aluminum alloy sheet, and the like may be applied.

The method for laminating polyester film on both sides of the metal sheet includes the one that a metal sheet is preliminarily heated, and a film is press-adhered to the metal sheet by a roll, followed by rapid cooling to bring the film at a portion near the interface with the metal sheet to melt to bring into amorphous state, thereby fusion-adhering the film to the metal sheet.

(Example 1)

Regarding the outer face film, a polyester composition was dried at room temperature, and then was molten and mixed at temperatures from 270°C to 290°C. The polyester composition was then extruded through a die onto a cooling drum to rapidly cool, thus forming single layer or multilayer non-oriented film. For the case of multilayer film, after the lamination, the film contacting with the metal sheet was defined as the lower layer, and the film exposed to air was defined as the upper layer. After extruding the lower layer and the upper layer from the respective dies, they were overlaid together to bring onto a cooling drum to rapidly cool, thus obtained a non-oriented film. The obtained non-oriented film was stretched in the longitudinal direction to 3.6 of stretch ratio at 72 °C of stretch temperature, and then was stretched in the lateral direction to 3.6 of stretch ratio at 85°C of stretch temperature, thereby obtaining a biaxially oriented film. The biaxially oriented film was adopted as the outer face film for the can end.

For the inner face film, the case that the same film to the outer face film was defined as Case (A), which film was formed by biaxial orientation using successive orientation method, while the case that a commercially available film of isophthalic acid copolymer PET (copolymerization ratio of isophthalic acid: 12% by mole) film having a thickness ranging from 15 to 40 μm was defined as Case (B).

The metal sheet for can end adopted an electrical chromium lacquered steel (ECCS) sheet (metallic chromium coating weight of 125 mg/m², chromium oxide hydrate coating weight of 14 mg/m², and sheet thickness of 0.24 mm). Onto both sides of the heated ECCS sheet, the respective inner face film and the outer face film were thermally fused to adhere using a pair of rubber rolls, the films were then immediately cooled by water to obtain the laminated metal sheet for can end. The laminating conditions (nip length of rubber roll, feed speed of metal sheet, and heating temperature of metal sheet) are given in Table 1.

Table 1 also shows the resin composition and thickness of outer face film on the laminated metal sheet for can end, the half-time of crystallization of the resin composing the amorphous layer at 130°C, the thickness of the amorphous layer, the water vapor transmissivity, and the resin composition and the thickness of inner face film.

TABLE 1 (1/4)

| | | Outer face film | | | | | | | | Inner face film | | Total thickness of outer face and inner face films (μm) | Laminating condition | | |
| | | Lower layer (the side contacting with metal sheet) | | | | Upper layer (the side exposed to air) | | Outer face total thickness (μm) | Water vapor transmissivity (g/m²/24hr) | | | | | | |
| | Single layer/ Multi layer | Resin composition | Thickness (μm) | Half-time of crystallization at 130°C (sec) | Thickness of amorphous layer (μm) | Resin composition | Thickness (μm) | | | Resin composition | Thickness (μm) | | Roll nip (mm) | Sheet feed speed (m/min) | Metal sheet heating temperature (°C) |
|---|---|---|---|---|---|---|---|---|---|---|---|---|---|---|---|
| Example 1 | Single layer | PET:60wt% PBT:40wt% | 15 | 30 | 5 | - | - | 15 | 85 | A | 15 | 30 | 17 | 40 | 219 |
| Example 2 | Single layer | PET:50wt% PBT:50wt% | 20 | 8 | 5 | - | - | 20 | 48 | B | 20 | 40 | 17 | 40 | 215 |
| Example 3 | Single layer | PET:40wt% PBT:60wt% | 15 | 4 | 5 | - | - | 15 | 63 | A | 15 | 30 | 17 | 40 | 211 |
| Example 4 | Multi layer | PET:40wt% PBT:60wt% | 5 | 4 | 4 | PET-I(IPA12mol%) | 10 | 15 | 64 | A | 15 | 30 | 15 | 40 | 211 |
| Example 5 | Multi layer | PET:30wt% PBT:70wt% | 15 | 3 | 5 | PET-I(IPA12mol%) | 5 | 20 | 50 | B | 20 | 40 | 17 | 40 | 207 |

TABLE 1 (2/4)

| | | Outer face film | | | | | | | | Inner face film | | Total thickness of outer face and inner face films (μm) | Laminating condition | | |
| | | Lower layer (the side contacting with metal sheet) | | | | Upper layer (the side exposed to air) | | Outer face total thickness (μm) | Water vapor transmissivity (g/m²/24hr) | | | | | | |
| | Single layer/ Multi layer | Resin composition | Thickness (μm) | Half-time of crystallization at 130°C (sec) | Thickness of amorphous layer (μm) | Resin composition | Thickness (μm) | | | Resin composition | Thickness (μm) | | Roll nip (mm) | Sheet feed speed (m/min) | Metal sheet heating temperature (°C) |
|---|---|---|---|---|---|---|---|---|---|---|---|---|---|---|---|
| Example 6 | Single layer | PET-1 (IPA12mol%):30wt% PBT:70wt% | 15 | 40 | 5 | - | - | 15 | 84 | B | 15 | 30 | 17 | 40 | 204 |
| Example 7 | Single layer | PET:50wt% PBT:50wt% | 10 | 8 | 5 | - | - | 10 | 98 | A | 10 | 20 | 17 | 40 | 215 |
| Example 8 | Multi layer | PET:50wt% PBT:50wt% | 15 | 8 | 5 | PET-I(IPA10mol%) | 15 | 30 | 35 | B | 30 | 60 | 17 | 40 | 215 |
| Example 9 | Single layer | PET:40wt% PBT:60wt% | 12 | 4 | 0.5 | - | - | 12 | 70 | A | 12 | 24 | 3.4 | 60 | 204 |
| Example 10 | Single layer | PET:60wt% PBT:40wt% | 15 | 30 | 8 | - | - | 15 | 68 | A | 15 | 30 | 27 | 33 | 227 |

TABLE 1 (3/4)

| | Single layer/ Multi layer | Outer face film | | | | | | | | Inner face film | | Total thickness of outer face and inner face films (µm) | Laminating condition | | |
|---|---|---|---|---|---|---|---|---|---|---|---|---|---|---|---|
| | | Lower layer (the side contacting with metal sheet) | | | | Upper layer (the side exposed to air) | | Outer face total thickness (µm) | Water vapor transmissivity (g/m²/24hr) | Resin composition | Thickness (µm) | | Roll nip (mm) | Sheet feed speed (m/min) | Metal sheet heating temperature (°C) |
| | | Resin composition | Thickness (µm) | Half-time of crystallization at 130°C (sec) | Thickness of amorphous layer (µm) | Resin composition | Thickness (µm) | | | | | | | | |
| Comparative example 1 | Single layer | PET:100% | 15 | 300 | 5 | - | - | 15 | 63 | A | 15 | 30 | 17 | 40 | 280 |
| Comparative example 2 | Single layer | PET-1 (IPA12mol %):100% | 15 | 1000 | 5 | - | - | 15 | 64 | A | 15 | 30 | 17 | 40 | 240 |
| Comparative example 3 | Single layer | PET:70% PBT:30% | 15 | 80 | 5 | - | - | 15 | 85 | A | 15 | 30 | 17 | 40 | 223 |
| Comparative example 4 | Single layer | PET:20% PBT:80% | 15 | 2 | 0.3 | - | | 15 | 64 | A | 15 | 30 | 3 | 70 | 200 |
| Comparative example 5 | Single layer | PET:30% PBT:70% | 15 | 3 | 10 | - | | 15 | 69 | A | 15 | 30 | 33 | 33 | 223 |

TABLE 1 (4/4)

| | Single layer/ Multi layer | Outer face film | | | | | | | | Inner face film | | Total thickness of outer face and inner face films (µm) | Laminating condition | | |
|---|---|---|---|---|---|---|---|---|---|---|---|---|---|---|---|
| | | Lower layer (the side contacting with metal sheet) | | | | Upper layer (the side exposed to air) | | Outer face total thickness (µm) | Water vapor transmissivity (g/m²/24hr) | Resin composition | Thickness (µm) | | Roll nip (mm) | Sheet feed speed (m/min) | Metal sheet heating temperature (°C) |
| | | Resin composition | Thickness (µm) | Half-time of crystallization at 130°C (sec) | Thickness of amorphous layer (µm) | Resin composition | Thickness (µm) | | | | | | | | |
| Comparative example 6 | Single layer | PET:40wt% PBT:60wt% | 12 | 4 | 0.3 | - | - | 12 | 70 | A | 20 | 32 | 3 | 70 | 204 |
| Comparative example 7 | Single layer | PET:50wt% PBT:50wt% | 10 | 8 | 5 | - | - | 10 | 120 | A | 10 | 20 | 17 | 40 | 222 |
| Comparative example 8 | Single layer | PET:30wt% PBT:70wt% | 15 | 3 | 8 | - | - | 15 | 150 | A | 15 | 30 | 30 | 33 | 235 |
| Comparative example 9 | Single layer | PET:50wt% PBT:50wt% | 8 | 8 | 5 | - | - | 8 | 105 | A | 8 | 16 | 17 | 40 | 215 |
| Comparative example 10 | Multi layer | PET:70wt% PBT:30wt% | 15 | 80 | 5 | PET-1(IPA10mol%) | 15 | 30 | 35 | B | 40 | 70 | 17 | 40 | 225 |

Table 2 shows the observed various characteristics for the laminated metal sheets obtained in above examples, after shaping the can end.

The method for shaping can end is the following.

A laminated metal sheet was punched to obtain a circular disk. The disk was press-formed to shape a can end having 52 mm in diameter. A sealing agent consisting mainly of styrene-butadiene rubber was lacquered on the inner periphery of the end. The can end was seamed to a weld can shell (can shell for 200 cc drink can) using a can end seamer (K.H. Home Seamer, manufactured by TOYO SEIKAN KAISHA, LTD.)
The evaluation of the formability of can end is given as follows.

(1) Outer face film delamination

At the seam section where the severest forming was applied, the can that generated film delamination was evaluated to X, and the can that did not generate film delamination was evaluated to ○.

(2) Film crack on the outer face film

In the neighbirhood of the outer peripheral edge on the can outer face where the mold touches during press-forming or seaming, the can that generated crack or flaw on the film was evaluated to X, and the can that performed successful film protection was evaluated to O.
The retort endurance evaluation (the state of bubble generation in amorphous layer) was given as follows.
In a state that the can end was seamed to the can shell, 100 g of tap water and 80 g of ice were poured therein. Thus prepared test can was placed in a high temperature steam environment (130°C) for 30 minutes. After that, the test can was taken out to observe the outer face of the end visually and using a light microscope. The can, on which many bubbles were identified in the amorphous layer of the outer face film of the can end by the microscope observation and on which significant turbidity of film was identified by visual observation, was evaluated to X. The can, on which bubbles were identified in the amorphous layer of the outer face of the can end by the microscope observation and on which turbidity of film was identified by visual observation, was evaluated to Δ. The can, on which no bubble was found in the amorphous layer of the outer face film of the can end by the microscope observation and on which no whitening and turbidity of film was found by visual observation, was evaluated to O.
The evaluation of can end seaming performance was given in view of the protrusion of sealing agent.
Observation of 30 cans was given at the can end seam section along the outer periphery thereof. As of these 30 cans, if any one of them showed protrusion of the sealing agent outward from the can end seam section, the evaluation of X was given to the 30 can group, and if no one showed protrusion of the sealing agent, the evaluation of ○ was given thereto.

Table 2

| | Can lid workabirity | | Retort endurance | Can lid seaming performance |
|---|---|---|---|---|
| | Outer face film separation | Flaw on outer face film | Generation of bubbles in amorphous layer | Protrusion of sealing agent |
| Example 1 | ○ | ○ | ○ | ○ |
| Example 2 | ○ | ○ | ○ | ○ |
| Example 3 | ○ | ○ | ○ | ○ |
| Examples 4 | ○ | ○ | ○ | ○ |
| Example 5 | ○ | ○ | ○ | ○ |
| Examples 6 | ○ | ○ | ○ | ○ |
| Example 7 | ○ | ○ | ○ | ○ |
| Examples 8 | ○ | ○ | ○ | ○ |
| Example 9 | ○ | ○ | ○ | ○ |
| Example 10 | ○ | ○ | ○ | ○ |
| comparative example 1 | ○ | ○ | × | ○ |
| Comparative example 2 | ○ | ○ | × | ○ |
| Comparative example 3 | ○ | ○ | Δ | ○ |

(continued)

| | Can lid workabirity | | Retort endurance | Can lid seaming performance |
|---|---|---|---|---|
| | Outer face film separation | Flaw on outer face film | Generation of bubbles in amorphous layer | Protrusion of sealing agent |
| Comparative example 4 | × | × | ○ | ○ |
| comparative example 5 | ○ | ○ | Δ | ○ |
| Comparative example 6 | × | ○ | ○ | ○ |
| Comparative example 7 | ○ | ○ | Δ | ○ |
| Comparative example 8 | ○ | ○ | × | ○ |
| Comparative example 9 | ○ | | Δ | ○ |
| Comparative example 10 | ○ | ○ | Δ | × |

As shown in Table 2, Examples 1 to 10 of the present invention gave favorable results for all levels. Therefore, the laminated steel sheet according to the present invention is suitable for the laminated steel sheet for can end.

For Comparative Examples, however, problem arose on at least one characteristic. Consequently, Comparative Examples are not suitable for the laminated steel sheet for can end. Comparative Examples 1 to 3 showed a long half-time of crystallization of the amorphous polyester layer at 130°C so that they could no suppress the bubble generation in the amorphous layer during retort sterilization, which raised a problem of appearance. Comparative Example 4 had excessively small thickness of the amorphous layer so that it was poor in formability, and generated film cracks on the film during can end forming. Comparative Example 5 had excessively large thickness of the amorphous layer so that it could not completely suppress the bubble generation in the amorphous layer. Comparative Example 6 had excessively small thickness of the amorphous layer so that it was poor in adhesion, thus induced the delamination of film during can end forming. Comparative Examples 7, 8, and 9 showed high water vapor transmissivity of the outer face film so that the invasion of water vapor into the film became significant, and it failed to completely suppress the bubble generation in the amorphous layer. Comparative Example 9 had thinner outer face film than that of other examples so that the film crack appeared on the film during can end forming. Comparative Example 10 had long half-time of crystallization of the amorphous polyester layer at 130°C so that it could not suppress the bubble generation in the amorphous layer during retort sterilization, which raised a problem of appearance, and further the sealing agent protruded out from the seam section during the seaming work.

The laminated steel sheet according to the present invention is not only free from film whitening and turbidity but also excellent in formability. Therefore, the laminated steel sheet according to the present invention is applicable also to the can shell of two-piece can.

**Claims**

1.  A laminated metal sheet for can end comprising a metal sheet and a polyester film being laminated on the metal sheet, wherein
    the polyester film has a water vapor transmissivity of 100 g/m$^2$/24 hr or smaller and has
    an amorphous polyester layer having
    a thickness in a range from 0.5 to 8 $\mu$m,
    a double refractive index of 0.015 or smaller and
    a half-time of crystallization of 40 seconds or smaller at 130 °C,
    wherein the amorphous polyester layer loses more the amorphous property at a larger distance from the interface with the steel sheet thereby becoming crystalline and the amorphous polyester layer resin is a polyester composition prepared by formulating a polyester (I) composed of ethylene terephthalate as a main repeating unit, and a polyester (II) composed of butylene terephthalate as a main repeating unit, while the percentage of the polyester (I) is in a range from 30 to 60% by weight, and the percentage of the polyester (II) is in a range from 40 to 70% by weight; wherein the polyester film being laminated on the metal sheet on a side to become outer face of the formed end has a thickness of 10 μm or larger, and the total thickness of the polyester films being laminated on the metal sheet on both sides thereof to become outer face and inner face of the formed end is 60 μm or smaller.

**Patentansprüche**

1.  Laminiertes Metallblech für einen Dosendeckel, das ein Metallblech und einen Polyesterfilm, der auf das Metallblech laminiert ist, umfasst, wobei

    der Polyesterfilm ein Wasserdampf-Durchlassvermögen von 100 g/m$^2$/24 h oder weniger aufweist und

    eine amorphe Polyesterschicht hat, die

    eine Dicke im Bereich von 0,5 bis 8 μm,

    einen Doppelbrechungsindex von 0,015 oder weniger und

    eine Kristallisationshalbzeit von 40 Sekunden oder weniger bei 130°C hat,

    wobei die amorphe Polyesterschicht mehr der amorphen Eigenschaft bei einem größeren Abstand von der Berührungsfläche mit dem Stahlblech verliert, so dass sie dadurch kristallin wird, und

    das amorphe Harz der Polyesterschicht eine Polyesterzusammensetzung ist, die durch Formulieren eines Polyesters (I), der aus Ethylenterephthalat als Hauptwiederholungseinheit besteht, und

    eines Polyesters (II), der aus Butylenterephthalat als Hauptwiederholungseinheit besteht, hergestellt wird, während der Prozentsatz des Polyesters (I) im Bereich von 30 bis 60 Gew.% liegt, und der Prozentsatz des Polyesters (II) im Bereich von 40 bis 70 Gew.% liegt;

    wobei der Polyesterfilm, der auf eine Seite des Metallblechs laminiert ist, um eine äußere Fläche des gebildeten Deckels zu werden, eine Dicke von 10 μm oder mehr aufweist, und die gesamte Dicke der Polyesterfilme, die auf beiden Seiten des Metallblechs laminiert sind, um eine äußere Fläche und eine innere Fläche des gebildeten Deckels zu werden, 60 μm oder weniger beträgt.

**Revendications**

1.  Feuille de métal stratifiée pour extrémité de boîte comprenant une feuille de métal et un film de polyester étant stratifié sur la feuille de métal, dans laquelle

    le film de polyester a une transmissivité de la vapeur d'eau inférieure ou égale à 100 g/m$^2$/24 heures et a une couche en polyester amorphe ayant une épaisseur dans une plage allant de 0,5 à 8 μm, un indice de biréfringence inférieur ou égal à 0,015 et un demi-temps de cristallisation inférieur ou égal à 40 secondes à 130 °C,

    dans laquelle la couche en polyester amorphe perd plus la propriété amorphe à une plus grande distance à partir de l'interface avec la tôle d'acier devenant ainsi cristalline et la résine de la couche en polyester amorphe est une composition de polyester préparée par la formulation

    d'un polyester (I) composé de téréphtalate d'éthylène en tant que motif répétitif principal, et

    d'un polyester (II) composé de téréphtalate de butylène en tant que motif répétitif principal, tandis que le pourcentage du polyester (I) est dans une plage allant de 30 à 60% en poids, et le pourcentage du polyester (II) est dans une plage allant de 40 à 70% en poids ;

    dans laquelle le film de polyester étant stratifié sur la feuille de métal sur un côté pour devenir la face extérieure de l'extrémité formée a une épaisseur supérieure ou égale à 10 μm, et l'épaisseur totale des films de polyester étant stratifiés sur la feuille de métal sur ses deux côtés pour devenir la face extérieure et la face intérieure de l'extrémité formée est inférieure ou égale à 60 μm.

**FIG 1**

FIG 2

**FIG 3**

FIG 4

**FIG 5**

Film thickness (μm)

- ●— Thickness of amorphous layer: 8 μm
- ■— Thickness of amorphous layer: 5 μm
- ▲— Thickness of amorphous layer: 2.5 μm

Adhesion interface

Film    Steel sheet

EP 1 690 675 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56010451 A
- JP 1192546 A
- JP 1192545 A
- JP 2057339 A
- JP 6422530 A
- JP 6155660 A
- JP 2002356568 A
- JP 7145252 A
- EP 0685509 A1
- US 5900325 A
- EP 0576682 A1